Europäisches Patentamt

European Patent Office

Office européen des brevets

(11) Publication number: **0 175 510**
**B1**

(12) **EUROPEAN PATENT SPECIFICATION**

(45) Date of publication of patent specification: **10.01.90**

(21) Application number: **85306146.3**

(22) Date of filing: **30.08.85**

(51) Int. Cl.⁵: **B 29 C 43/12,** B 29 C 43/36 //
B29K105:08

(54) Vacuum bagging.

(30) Priority: **18.09.84 GB 8423580**

(43) Date of publication of application:
**26.03.86 Bulletin 86/13**

(45) Publication of the grant of the patent:
**10.01.90 Bulletin 90/02**

(84) Designated Contracting States:
**AT BE CH DE FR GB IT LI LU NL SE**

(56) References cited:
**DE-A-3 145 698**
**FR-A-2 459 118**
**GB-A-2 006 092**
**GB-A-2 073 648**
**US-A-4 359 437**

(73) Proprietor: **Aerovac Systems (keighley) Limited
Holycroft works Kensington Street
Keighley West Yorkshire BD21 1PW (GB)**

(72) Inventor: **Gibson, Howard Thomas
Aerovac Systems(Keighley) Ltd. Kensington
Street
Keighley West Yorkshire, BD21 1PW (GB)**

(74) Representative: **Wharton, Peter Robert
P.R. Wharton & Co. Beckett's Bank Chambers 19
Cheapside
Bradford West Yorkshire BD1 4HR (GB)**

Courier Press, Leamington Spa, England.

## Description

This invention relates to an apparatus useful in the production of resin filled, carbon, glass, synthetic material and metal laminate structures otherwise known as composites by the vacuum bagging system and in particular relates to an improved seal therefor.

Vacuum bagging is a term used to describe a method of producing pressure and vacuum on the various resin filled, carbon, glass, synthetic materials and metal laminates otherwise known as composites while curing and consolidation takes place, usually by means of heating in a pressurised autoclave or oven. The method may be used in production of various composite parts useful in the aircraft and performance motor car industries.

The initial method used involved 'laying up' the component together with layers of release sheets, bleeder cloths, air bleed ropes, rubber compression sheets and the like, on a metal or composite base; covering the whole with an impervious sheet of flexible plastic material; and securely sealing the latter to the base plate. This was achieved by means of a special acrylic sealant putty and/or adhesive tapes to allow a vacuum to be drawn within the flexible plastic material sheet or 'bag'. The bag is draped over the contours of the component and to ensure a good 'lay-up' and an efficient vacuum seal the process needs careful workmanship and takes a considerable time to operate. After curing in the autoclave or oven the vacuum bag must be removed with the special putty, which entails considerable cleaning up of the base plate and the bag and putty must often be replaced.

DE—A—3145698 discloses an apparatus for producing resin filled articles which comprises a mould base and a membrane such that a vacuum can be drawn between the two to form the resin-filled article. The membrane is sealed around the sides hereof by means of a projection fitting within a corresponding depression in the mould base and vacuum being applied to hold the projection within the depression.

In our UK Patent number 2073648 there is described an improved apparatus for forming a vacuum bag which comprises a base, ribbing fixed to the base about its perimeter, a stretchable membrane held within a framework and able to form a seal with the said ribbing, and means of fastening the framework to the base thereby forming a seal between the ribbing and the stretchable membrane, and means for forming a vacuum between the membrane the ribbing and the base.

The latter apparatus works very well in most applications but suffers from two disadvantages. Firstly, the ribbing is fixed to the base plate of the mould and must therefore normally be secured in position on site in the user's factory. Secondly, when the mould component being produced involves very deep cavities the raised ribbing can in some circumstances prevent the membrane from evenly contacting the mould components after the vacuum is drawn.

The present invention seeks to provide a form of the apparatus disclosed in our above mentioned UK patent in which the seal is modified to overcome or reduce the above mentioned disadvantages.

According to the present invention there is provided an apparatus for forming articles of resin filled materials which comprises a stretchable membrane which, when placed on a mould base forms a resin filled article located therebetween, the sealing of the side of the membrane being effected by vacuum, characterised in that the membrane is held within a rigid framework which is hollow and forms a vacuum manifold supplying vacuum to a seal affixed to the membrane and carried on the framework via one or more passages communicating with a cavity, the resilient seal defining the cavity within which vacuum can be drawn when the framework and membrane are placed on the mould base and in that means are provided for connecting the cavity with a source of vacuum.

Preferably the seal comprises a pair of tubular members formed of a resilient plastic materials between them defining a vacuum cavity. When in place on a mould base the tubular members each seal with the base and vacuum drawn into the cavity pulls this seal tight. Conveniently the outer tubular member is provided with a flexible curtain depending downwardly and which serves the purpose of enabling a preliminary seal to be formed when vacuum is first applied until the sealing members are drawn into sealing contact with the base, but this is not essential and may be omitted. By the apparatus of the invention two distinctive advantages are realised.

Firstly the sealing member is affixed to the membrane within its framework and so the assembly may be prefabricated without the necessity of the mould base being present provided its dimensions and contours are known in advance. Secondly, the seal is, in use, considerably shorter in height than the ribbing disclosed in our above mentioned UK patent, allowing the membrane to stretch further into deep mould cavities.

Advantageously the framework doubles as a vacuum manifold, i.e. it is hollow and supplies vacuum to the seal via one or more passages in the seal to the cavity communicating with the vacuum manifold framework. The latter may be a vacuum-tight box section, e.g. of aluminium, or a convoluted metal, e.g. steel, hose.

Preferably, as before, curing is carried out by heating the bagged lay up, for example, in an autoclave or oven. Consequently, the materials from which the various components are made are of necessity capable of standing curing temperatures without degradation. The preferred material for the membrane is an elastomeric silicone rubber sheet having elongation and tear strength properties and being capable of continued service at temperatures in the region of 400 F (200 C).

Similarly the tubular members which form the vacuum cavity seal should also be of a similar material.

The membrane with its vacuum cavity seal is attached to a framework, for example an aluminium box-section, so that the membrane may be handled easily. This is especially important when the apparatus is used in the making of relatively large lay ups. The membrane and seals within the frame can be easily placed in its correct position over the base and the framework, membrane and seals are accurately located and contacted to the base by clipping the frame to the base. The rigid framework with the vacuum cavity seals has the further advantage that it secures and seals the perimeter of the membrane while the vacuum within the bag is drawn thus dispensing with the need for separate adhesive tape and the like which was formerly used in these circumstances.

Where the seals comprise of tubular members it is advantageous to provide bleed holes to atmosphere to prevent pressure build-up during autoclaving. The invention will be described further, by way of example with reference to the accompanying drawings in which:

Figure 1 is a diagrammatic sectional view of an apparatus in accordance with the invention on a mould base; and

Figure 2 is a more detailed sectional view on a larger scale of the seal.

Referring to the drawings, the apparatus comprises an outer vacuum manifold framework 10 for example of aluminium, to which is affixed stretchable membrane 12. A seal generally designated 14 is bonded to the membrane 12 and the framework 10 by means of a suitable bonding agent or adhesive. The seal 14 may be integral with the membrane 12 or may be bonded thereto.

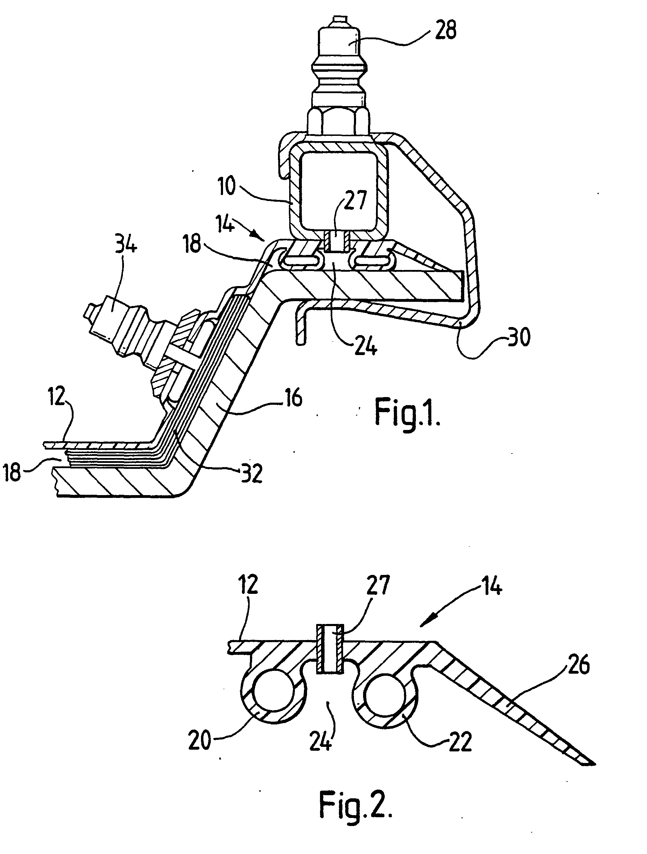

As illustrated in figure 1, the apparatus is intended to be used in conjunction with a mould base 16 to which the vacuum manifold framework may be clipped by means of clips 30 and which may include one or more cavities 18 into which the membrane 12 is drawn during the vacuum bag operation.

A preferred form of seal is illustrated more clearly in figure 2 and can be seen to comprise a pair of tubular members 20, 22 of a resilient elastomeric material bonded to the membrane 12 and defining between them a cavity 24. A tapering curtain 26 depending downwardly from the outer tubular member 22 may also be provided.

In use, the vacuum manifold framework 10 is manufactured of a size and shape, for example rectangular, corresponding to the peripheral dimensions of the mould base 16. The membrane 12 is affixed thereto and the seal 14 also about the periphery of the membrane. The seal cavity 24 communicates with the manifold 10 via one or more passages 27.

This unit may then be taken to location of the mould base where it will be placed on top of the mould base over a lay up 32, for example in the cavity 18. The vacuum manifold framework 10 will be clipped to the base by means of clips 30. A vacuum is firstly drawn within the cavity 24 of the seal 14 by means, for example, of one or more vacuum valves 28 connected into the vacuum manifold framework and to a suitable vacuum source.

As can be seen from figure 1 the curtain portion 26, when provided, forms a loose seal with the mould base edge which is enhanced when the vacuum is applied until the tubular members 20 and 22 are pulled into sealing engagement with the mould base 16 by means of the vacuum being drawn in the cavity 24 via the vacuum manifold. When this vacuum has been drawn, the apparatus is securely attached in sealing engagement with the mould base 16 and a vacuum can be drawn within the 'bag' portion by means of a suitable valve 34 within the membrane 12. Alternatively, there may be communication between the vacuum cavity 24 and the mould cavity 18 so that a single vacuum source both forms the seal and draws the vacuum within the membrane 12. However in many cases this will not be preferred since the requirement may be to vent the vacuum in cavity 18 whilst retaining the vacuum in cavity 24 and therefore the integrity of the seal. It is often advantageous to be able to release (and re-apply) the vacuum within the mould cavity 18 without disturbing the seal.

The apparatus of the invention provides an excellent seal and furthermore allows the operative parts of the vacuum bagging operation to be assembled away from the mould base and taken to the location of the mould base in a ready-to-use form.

**Claims**

1. An apparatus for forming articles of resin filled materials which comprises a stretchable membrane (12) which, when placed on a mould base (16) forms a resin filled article located therebetween, the sealing of the side of the membrane being effected by vacuum, characterised in that the membrane (12) is held within a rigid framework (10) which is hollow and forms a vacuum manifold (10) supplying vacuum to a seal (14) affixed to the membrane and carried on the framework via one or more passages (27) communicating with a cavity (24), the resilient seal (14) defining the cavity (24) within which vacuum can be drawn when the framework and membrane are placed on the mould base (16) and in that means (10, 27, 28) are provided for connecting the cavity with a source of vacuum.

2. An apparatus as claimed in claim 1 in which the seal (14) comprises a pair of tubular members (20, 22) formed of a resilient plastics material between them defining the vacuum cavity (24).

3. An apparatus as claimed in claims 1 or 2 in which the framework (10) is a vacuum tight aluminium box-section.

4. An apparatus as claimed in any one of claims 1 to 3 in which the membrane (12) is formed from an elastomeric silicone rubber sheet having high elongation and tear strength properties.

5. An apparatus as claimed in any one of claims 1 to 4 in which the seal is formed from an elastomeric silicone rubber.

6. An apparatus as claimed in any one of claims 2 to 5 in which the tubular members (20, 22) contain one or more air bleeds to prevent pressure build-up during autoclaving.

7. An apparatus as claimed in any one of claims 1 to 6 in which a vacuum can be drawn between the membrane (12) and the mould base (16) independently of the vacuum which can be drawn in the vacuum seal cavity (24).

## Patentansprüche

1. Vorrichtung zum Formen von Produkten aus Materialien mit einem Harz als Füllmittel, die eine dehnbare Membran (12) aufweist, die, wenn sie auf eine Formbasis (16) gesetzt ist, ein Produkt, das sich dazwischen befindet, formt, wobei die Dichtung der Membranseite durch Vakuum herbeigeführt wird, dadurch gekennzeichnet, daß die Membran (12) innerhalb eines starren Rahmens (10) gehalten wird, der hohl ist und einen Vakuum-Rohrverteiler (10) bildet, der Vakuum an eine Dichtung (14) liefert, die an der Membran befestigt ist, und auf dem Rahmen über einen oder mehrere Durchgänge (27), die mit einer Höhlung (24) in Verbindung stehen, gehalten wird, wobei die biegsame Dichtung (14) die Höhlung (24) bestimmt, innerhalb derer ein Vakuum gezogen werden kann, wenn der Rahmen und die Membran auf die Formbasis (16) gesetzt sind, und daß Mittel (10, 27, 28) vorgesehen sind, um die Höhlung mit einer Vakuumquelle zu verbinden.

2. Vorrichtung nach Anspruch 1, in der die Dichtung (14) ein Paar rohrförmiger Elemente (20, 22) enthält, die aus einem biegsamen Plastikmaterial gebildet sind und zwischen ihnen die Vakuumhöhlung (24) bestimmen.

3. Vorrichtung nach einem der Ansprüche 1 oder 2, in der der Rahmen (10) ein vakuumdichtes Kastenprofil aus Aluminium ist.

4. Vorrichtung nach einem der Ansprüche 1 bis 3, in der die Membran (12) aus einem elastomerischen Silikongummi-Sheet gebildet ist, das erhöhte Dehnungs- und Zugfestigkeitseigenschaften aufweist.

5. Vorrichtung nach einem der Ansprüche 1 bis 4, in der die Dichtung aus einem elastomerischen Silikongummi gebildet ist.

6. Vorrichtung nach einem der Ansprüche 2 bis 5, in der die Rohrelemente (20, 22) eine oder mehrere Entlüftungsöffnungen aufweisen, um den Aufbau von Druck während der Autoklavbehandlung zu verhindern.

7. Vorrichtung nach einem der Ansprüche 1 bis 6, in der ein Vakuum zwischen der Membran (12) und der Formbasis (16) gezogen werden kann, unabhängig von dem Vakuum, das in der Vakuum-Dichtungshöhlung (24) gezogen werden kann.

## Revendications

1. Appareil pour la fabrication d'articles en matières imprégnées de résine, qui comprend une membrane étirable (12) qui, lorsqu'elle est placée sur une base de moule (16), forme un article imprégné de résine interposé entre la membrane et la base, l'étanchéité du pourtour de la membrane étant effectuée par mise sous vide, caractérisé en ce que la membrane (12) est tenue dans un cadre rigide (10) qui est creux et constitue un collecteur de vide (10) fournissant le vide à un dispositif d'étanchéité (14) fixé à la membrane et porté sur le cadre, par l'intermédiaire d'un ou de plusieurs passages (27) communiquant avec une cavité (24), le dispositif d'étanchéité élastique (14) définissant la cavité (24) dans laquelle le vide peut être engendré lorsque le cadre et la membrane sont placés sur la base de moule (16), et en ce que des moyens (10, 27, 28) sont prévus pour connecter la cavité avec une source de vide.

2. Appareil suivant la revendication 1, dans lequel le dispositif d'étanchéité (14) comprend deux éléments tubulaires (20, 22) en matière plastique élastique qui définissent entre eux la cavité à vide (24).

3. Appareil suivant la revendication 1 ou 2, dans lequel le cadre (10) est un profilé creux en aluminium étanche au vide.

4. Appareil suivant l'une quelconque des revendications 1 à 3, dans lequel la membrane (12) est formée d'une feuille de caoutchouc de silicone élastomère ayant des caractéristiques élevées d'allongement et de résistance à la déchirure.

5. Appareil suivant l'une quelconque des revendications 1 à 4, dans lequel le dispositif d'étanchéité est en caoutchouc de silicone élastomère.

6. Appareil suivant l'une quelconque des revendications 2 à 5, dans lequel les éléments tubulaires (20, 22) contiennent une ou plusieurs purges d'air, pour éviter la création d'une pression pendant le passage en autoclave.

7. Appareil suivant l'une quelconque des revendications 1 à 6, dans lequel un vide peut être créé entre la membrane (12) et la base du moule (16) indépendamment du vide qui peut être créé dans la cavité (24) du dispositif d'étanchéité sous vide.

Fig.1.

Fig.2.